# EUROPÄISCHE PATENTANMELDUNG

(11) **EP 2 743 668 A2**
(43) Veröffentlichungstag der Anmeldung: **18.06.2014**
(21) Anmeldenummer: 13196852.1
(22) Anmeldetag: 12.12.2013
(51) Int. Cl.: G01M 3/28

(54) **Vorrichtung und Verfahren zur Überprüfung der Dichtheit einer Komponente einer Getränkeabfüllanlage**

(30) Priorität: 12.12.2012 DE 102012112174
(71) Anmelder: Krones AG, 93073 Neutraubling (DE)
(72) Erfinder: Schönfelder, Markus, 93073 Neutraubling (DE)
(74) Vertreter: Nordmeyer, Philipp Werner

(57) **Zusammenfassung**

Die Erfindung bezieht sich auf eine Vorrichtung zur Überprüfung der Dichtheit einer ein Innenvolumen (14, 24) zumindest teilweise begrenzenden Komponente (1, 2) einer Getränkeabfüllanlage, umfassend einen mit dem Innenvolumen (14, 24) kommunizierenden Druckerzeuger (40) zum Beaufschlagen des Innenvolumens (14, 24) mit einem Prüfdruck, wobei eine schaltbare Abdichtvorrichtung (30, 32) vorgesehen ist, welche dazu eingerichtet ist, das Innenvolumen (14, 24) für eine Überprüfung der Dichtheit der Komponente gegenüber der Umgebung abzudichten.

## Beschreibung

### Technisches Gebiet

Die vorliegende Erfindung betrifft eine Vorrichtung sowie ein Verfahren zur Überprüfung der Dichtheit einer Komponente einer Getränkeabfüllanlage, insbesondere zur Überprüfung der Dichtheit eines Faltenbalges in einem Verschließelement, einem Füllorgan, einer Transportvorrichtung, einem Rinser oder einem Sterilisator einer aseptischen Getränkeabfüllanlage.

### Stand der Technik

Zur Abdichtung mechanischer Durchgangsverbindungen zwischen einem Grauraum oder Außenraum und einem Isolator in einer Getränkeabfüllanlage, insbesondere zum Übertragen translatorischer oder rotatorischer Bewegungen von dem Außenraum in den Isolatorraum einer Getränkeabfüllanlage ist es bekannt, die jeweiligen Maschinenteile über entsprechende Dichtmittel gegenüber dem Reinraum abzudichten. Hierbei ist es insbesondere bekannt, beispielsweise bei einem Verschließorgan, die translatorische Auf- und Abbewegung des Verschließkopfes gegenüber einem Isolatordach beziehungsweise die translatorische Bewegung eines Auswerfers gegenüber dem Verschießkopf über Faltenbälge abzudichten.

Die Überprüfung der Dichtheit solcher Faltenbälge ist sehr aufwändig, ist aber gleichzeitig von großer Bedeutung für die Betriebssicherheit und Sterilität der Getränkeabfüllanlage.

Faltenbälge und andere Abdichtungselemente in Getränkeabfüllanlagen unterliegen Verschleiß und anderen Umwelteinflüssen, so dass eine regelmäßige Überprüfung bezüglich deren Dichtheit wesentlich ist. Auch nach Einbau eines solchen Elementes ist eine Überprüfung, beispielsweise auf Montagefehler hin, wichtig. Eine defekte Komponente kann zu schwerwiegenden Schäden führen, so wie beispielsweise zu Verkeimungen im Bereich des Isolators, und damit zu einer unbrauchbaren Produktion.

Aus der JP 63-199962 A ist eine Vorrichtung zum Übertragen einer geradlinigen Bewegung bekannt, wobei ein Innenraum über einen Faltenbalg gegenüber einem Außenraum abgedichtet ist. Ein zweiter Faltenbalg ist innerhalb des ersten Faltenbalges angeordnet und der Zwischenraum zwischen den beiden Faltenbälgen wird mit einem Vakuum so beaufschlagt, dass eine mögliche Undichtheit des ersten und/oder des zweiten Faltenbalges über das Verhalten des Druckes in dem Zwischenraum detektiert werden kann. Die Vorrichtung benötigt jedoch zwei Faltenbälge, welche den gleichen Abschnitt abdichten.

### Darstellung der Erfindung

Ausgehend von dem bekannten Stand der Technik ist es eine Aufgabe der vorliegenden Erfindung, eine verbesserte Vorrichtung zur Überprüfung der Dichtheit einer Komponente einer Getränkeabfüllanlage anzugeben, welche die Betriebsabläufe nicht behindert.

Die vorstehende Aufgabe wird durch eine Vorrichtung zur Überprüfung der Dichtheit einer Komponente einer Getränkeabfüllanlage mit den Merkmalen des Anspruchs 1 gelöst. Vorteilhafte Weiterbildungen ergeben sich aus den Unteransprüchen.

Entsprechend wird eine Vorrichtung zur Überprüfung der Dichtheit einer ein Innenvolumen zumindest teilweise begrenzenden Komponente einer Getränkeabfüllanlage vorgeschlagen, umfassend einen mit dem Innenvolumen kommunizierenden Druckerzeuger zum Beaufschlagen des Innenvolumens mit einem Prüfdruck. Erfindungsgemäß ist eine schaltbare Abdichtvorrichtung vorgesehen, welche dazu eingerichtet ist, das Innenvolumen für eine Überprüfung der Dichtheit der Komponente gegenüber der Umgebung abzudichten.

Durch die Bereitstellung einer schaltbaren Abdichtvorrichtung zum schaltbaren Abdichten des Innenvolumens gegenüber der Umgebung zum Aufbringen eines Unterdrucks in das Innenvolumen lässt sich über eine Messung des Druckverlaufs im Innenraum bei geschlossener Abdichtvorrichtung die Dichtheit des Gesamtsystems überprüfen. Auf diese Weise kann erreicht werden, dass nicht nur eine Komponente, sondern das gesamte interessierende System auf effiziente Weise auf seine Dichtheit getestet werden kann.

Weiterhin wird bei Öffnung der schaltbaren Abdichtvorrichtung sichergestellt, dass die Innenvolumina ventiliert werden können, so dass auch beispielsweise bei einer Volumenveränderung des Innenvolumens, welche auf die zu überwachende Komponente wirkt, ein gleichmäßiger Druck auf die Komponente wirken kann. Dies ist insbesondere im Produktionsbetrieb bei einer Getränkeabfüllanlage von Bedeutung, wenn beispielsweise ein Verschließelement periodisch angehoben und abgesenkt wird und entsprechend das von dem abdichtenden Faltenbalg umschlossene Innenvolumen variiert. Über eine entsprechende Ventilation des Innenraums kann dann ein gleichbleibender Druck, beispielsweise der Umgebungsdruck, in dem Faltenbalg herrschen, so dass hier keine übermäßige Beanspruchung des Faltenbalges stattfindet. Ebenso wird durch Verwendung schaltbarer Abdichtvorrichtungen vermieden, dass die Abdichtvorrichtungen während Produktionsbetrieb an einem abzudichtenden Element anliegen und so durch Reibung einem Verschleiß unterworfen sind.

Bevorzugt kommuniziert das Innenvolumen über einen Belüftungszugang mit der Umgebung und der Belüftungszugang ist mittels der schaltbaren Abdichtvorrichtung abdichtbar. Auf diese Weise kann eine definierte Ventilation und eine definierte Abdichtung der Innenvolumina erreicht werden, so dass zum einen eine zuverlässige Ventilation ohne Beanspruchung der Komponente erreicht werden kann, und zum anderen eine definierte Dichtheitsprüfung erfolgen kann.

Um den Druckverlauf messen zu können und damit die Dichtheitsprüfung durchführen zu können, kommuniziert das Innenvolumen bevorzugt mit einem Druckaufnehmer und der Druckverlauf kann über eine vorbestimmte Zeit hinweg gemessen werden.

In einer bevorzugten Weiterbildung kommunizieren mindestens zwei von unterschiedlichen Komponenten zumindest teilweise begrenzte Innenvolumina miteinander, bevorzugt über Durchgänge, besonders bevorzugt ständig. So kann eine effiziente Überprüfung der Dichtheit durch gleichzeitige Messung mehrerer Komponenten durchgeführt werden. Dabei ist es unerheblich, ob die Komponenten rotatorische und oder translatorische Relativbewegungen abdichten.

Die Komponenten sind bevorzugt ein Faltenbalg oder eine Dichtung zur Abdichtung eines Maschinenteils gegenüber der Umgebung, bevorzugt gegenüber einem Reinraum.

Ein besonders zuverlässiger Betrieb wird dadurch erreicht, dass der Druckerzeuger mit dem Innenvolumen über eine Absaugleitung kommuniziert, wobei die Absaugleitung in das Innenvolumen bevorzugt an dessen tiefstem Punkt einmündet, um ein Absaugen von Flüssigkeiten, Verschmutzungen und/oder Kondensat am tiefsten Punkt des Innenvolumens zu ermöglichen. Die Absaugleitung ist besonders bevorzugt in ein Auswerfelement eines Verschließorgans integriert.

Falschpositive Dichtheitsprüfungen können vorteilhaft dadurch vermieden werden, dass ein Durchgangsprüfer vorgesehen ist, welcher dazu eingerichtet ist, vor der Abdichtung des Innenvolumens mittels der schaltbaren Abdichtvorrichtung die Durchgängigkeit aller mit dem Druckerzeuger kommunizierenden Volumina zu prüfen und bevorzugt bei Vorliegen einer Blockade ein Abdichten des Innenvolumens zu verhindern und/oder eine Alarmierung auszugeben.

Weiterhin kann ein zuverlässiger Betrieb dadurch erreicht werden, dass der Druckerzeuger vorteilhaft dazu eingerichtet ist, das Innenvolumen bei verschlossener Abdichtvorrichtung zur Überprüfung der Dichtheit der Komponente mit einem Prüfdruck zu beaufschlagen und bei geöffneter Abdichtvorrichtung das Innenvolumen mit einem Spülgas, bevorzugt mit einem sterilen und/oder sterilisierenden Spülgas, zu durchströmen.

Die oben genannte Aufgabe wird weiterhin durch eine Behälterbehandlungsvorrichtung für eine Getränkeabfüllanlage mit den Merkmalen des Anspruchs 9 gelöst. Vorteilhafte Weiterbildungen ergeben sich aus den Unteransprüchen.

Entsprechend wird eine Behälterbehandlungsvorrichtung für eine Getränkeabfüllanlage vorgeschlagen, umfassend mindestens zwei Betätigungsvorrichtungen zur Durchführung von Behandlungsschritten an einem Behälter in einem Reinraum, wobei jede Betätigungsvorrichtung mindestens eine ein Innenvolumen zumindest teilweise begrenzende Komponente zur Abdichtung des Innenvolumens gegenüber dem Reinraum aufweist. Erfindungsgemäß ist eine Vorrichtung zur Überprüfung der Dichtheit der das Innenvolumen zumindest teilweise begrenzenden Komponenten, so wie sie oben beschrieben ist, vorgesehen, wobei die Innenvolumina von mindestens zwei Betätigungsvorrichtungen gemeinsam mit einem Druckerzeuger kommunizieren.

So lässt sich durch die Verbindung der Druckprüfung aus mindestens zwei Betätigungsvorrichtungen, beispielsweise zwei Verschließorganen, eine effiziente Prüfung erreichen, welche auch in kurzen Produktionspausen durchgeführt werden kann, da eine kumulative Prüfung einer Vielzahl - oder auch aller - Komponenten durchgeführt werden kann. Wenn die Prüfung ergibt, dass das System dicht ist, kann der Produktionsbetrieb unmittelbar weitergeführt werden. Wenn die Prüfung ein Problem ergibt, so muss die Produktion ohnehin unterbrochen werden und die Komponente ausgetauscht werden. Eine schnelle Prüfung auf ein positives Ergebnis hin ist daher von Bedeutung für einen sicheren und effizienten Produktionsbetrieb.

Bevorzugt ist eine Steuervorrichtung zur Steuerung der Beaufschlagung der Innenvolumina mit dem Prüfdruck, sowie zur Steuerung der schaltbaren Abdichtvorrichtungen vorgesehen, wobei die Steuervorrichtung dazu eingerichtet ist, die Vorrichtung zur Überprüfung der Dichtheit so zu steuern, dass die Innenvolumina mindestens zweier Betätigungsvorrichtungen gemeinsam mit einem Prüfdruck beaufschlagt werden, der zeitliche Druckverlauf des Prüfdrucks bestimmt wird und aus dem Druckverlauf auf die Dichtheit geschlossen wird, und dass bevorzugt vor der Beaufschlagung der Innenvolumina mit dem Prüfdruck die Innenvolumina mit einem Spülgas durchströmt werden.

Besonders bevorzugt ist die Steuervorrichtung dazu eingerichtet, die Vorrichtung zur Überprüfung der Dichtheit so zu steuern, dass die Innenvolumina mindestens zweier Betätigungsvorrichtungen miteinander in Kommunikation gebracht werden und gemeinsam mit einem Prüfdruck beaufschlagt werden, wobei bevorzugt ein Beaufschlagen der Innenvolumina aller Betätigungsvorrichtungen und/oder ein selektives Beaufschlagen der Innenvolumina von Gruppen von Betätigungsvorrichtungen mit einem Prüfdruck durchgeführt werden kann. Durch die selektive oder gruppenweise Beaufschlagung kann eine undichte Komponente schnell gefunden werden.

Die oben gestellte Aufgabe wird weiterhin durch ein Verfahren mit den Merkmalen des Anspruchs 12 gelöst. Vorteilhafte Weiterbildungen ergeben sich aus den Unteransprüchen.

Entsprechend wird ein Verfahren zur Überprüfung der Dichtheit einer ein Innenvolumen zumindest teilweise begrenzenden Komponente einer Getränkeabfüllanlage vorgeschlagen, wobei das Innenvolumen mit einem Druckerzeuger kommuniziert. Das Verfahren umfasst die Schritte des Abdichtens des Innenvolumens gegenüber der Umgebung durch Schalten einer schaltbaren Abdichtvorrichtung, des Beaufschlagens des gegenüber der Umgebung abgedichteten Innenvolumens mit einem Prüfdruck, des Messens des Druckverlaufs des Prüfdrucks über eine vorbestimmte Zeit und des Überprüfens der Dichtheit aufgrund des gemessenen Druckverlaufs. Auf diese Weise kann eine sichere und effiziente Überprüfung der Dichtheit der Komponente durchgeführt werden.

Bevorzugt wird das Innenvolumen vor der Abdichtung gegenüber der Umgebung mit einem Spülgas, bevorzugt Luft, gespült, besonders bevorzugt durch Absaugen des Innenvolumens mittels des Druckerzeugers, um Verunreinigungen, Kondensat und/oder Feuchtigkeit aus dem Innenvolumen zu entfernen. Dabei erfolgt die Erzeugung eines Unterdrucks vorteilhaft durch eine Venturidüse, die ein wartungsarmes und kostengünstiges Bauteil darstellt.

Um falschpositive Ergebnisse zu reduzieren wird bevorzugt vor dem Abdichten des Innenvolumens die Durchgängigkeit aller mit dem Druckerzeuger kommunizierender Volumina geprüft und bei Vorliegen einer Blockade ein Abdichten des Innenvolumens gegenüber der Umgebung durch Schalten der schaltbaren Abdichtvorrichtung verhindert und/oder ein Alarmsignal ausgegeben.

Bevorzugt werden zur Überprüfung der Dichtheit der Komponenten die Innenvolumina mindestens zweier Betätigungsvorrichtungen miteinander in Kommunikation gebracht und gemeinsam mit einem Prüfdruck beaufschlagt, wobei bevorzugt ein Beaufschlagen der Innenvolumina aller Betätigungsvorrichtungen und/oder ein selektives Beaufschlagen der Innenvolumina von Gruppen von Betätigungsvorrichtungen mit einem Prüfdruck durchgeführt wird.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische Schnittansicht durch ein Verschließorgan in einem Verschließer einer Behälterbehandlungsanlage;
- Figur 2: eine perspektivische schematische Ansicht des Verschließorgans aus Figur 1; und
- Figur 3: eine schematische Darstellung einer Schaltung zur Überprüfung mehrerer Komponenten in einem Verschließer einer Behälterbehandlungsanlage.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

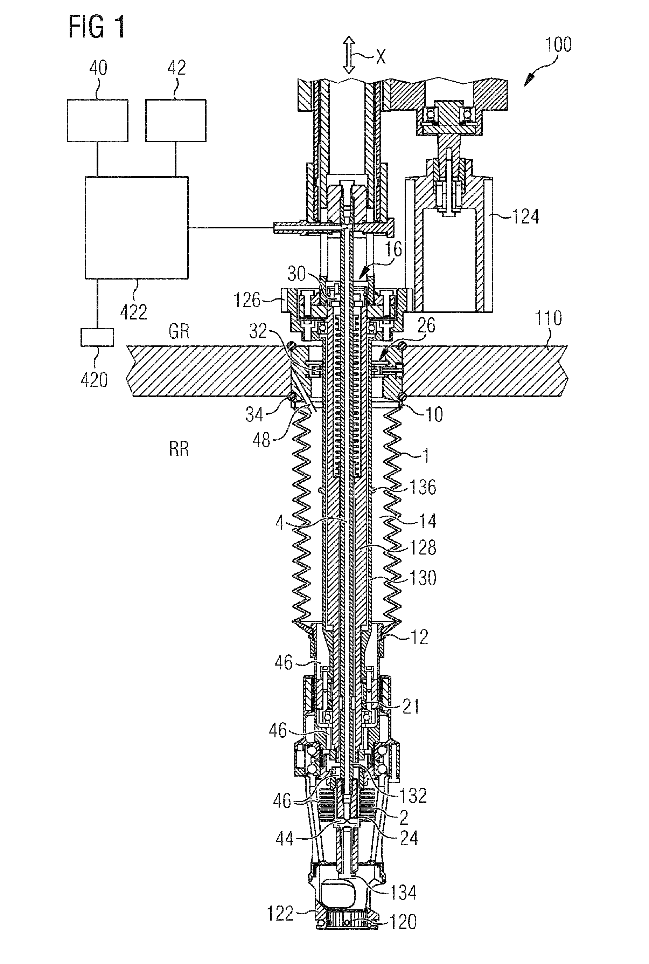

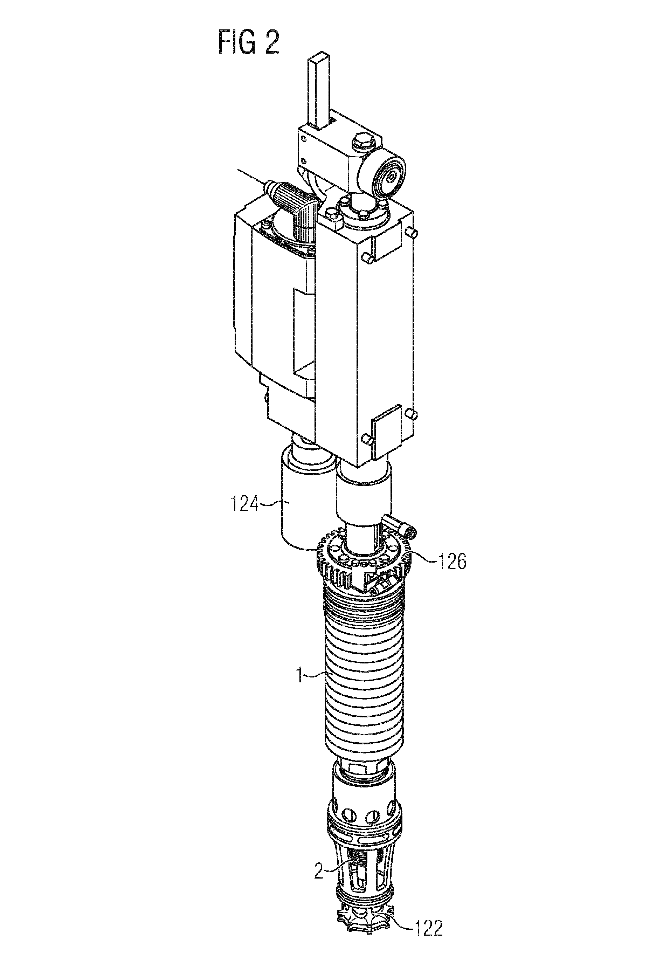

Figuren 1 und 2 zeigen schematisch eine Betätigungsvorrichtung 100 in Form eines Verschließorgans, welche in dem Isolatordach 110 einer Getränkeabfüllanlage angeordnet ist. Es handelt sich hierbei bevorzugt um eine aseptische Getränkeabfüllanlage, in welcher Getränkeprodukte bei einer niedrigen Keimbelastung in entsprechende Behälter abgefüllt werden können und die Behälter dann über das Aufbringen von Behälterverschlüssen 120 auf die Behälter verschlossen werden können. Der dargestellte Ausschnitt des Isolatordaches 110 kann um eine nicht gezeigte Karussellachse rotieren und ist vorzugsweise mittels geeigneter Dichtungsvorrichtungen (nicht gezeigt), wie beispielsweise einer Siphondichtung, gegenüber einem feststehenden Teil des Isolatordaches abgedichtet. Die Behälterverschlüsse 120 werden mittels der gezeigten Betätigungsvorrichtung 100 auf die nicht gezeigten Behälter aufgebracht, wobei der jeweilige Behälterverschluss 120 dabei auf das Gegengewinde des Behälters abgesenkt wird und auf dieses aufgeschraubt wird.

Das Isolatordach 110 trennt in der in Figur 1 gezeigten Ausbildung den darunter angeordneten Reinraum RR von dem darüber angeordneten Grauraum GR so, dass im Reinraum RR über entsprechende Filteranlagen eine definierte Atmosphäre erreicht werden kann, welche sich beispielsweise durch eine geringe Keimzahl und eine vordefinierte Temperatur und Luftfeuchtigkeit auszeichnet. Der Reinraum wird üblicherweise definiert mit einem Gas, beispielsweise Sterilluft, begast und in periodischen Abständen gereinigt und sterilisiert, so dass bei der Abfüllung von Lebensmitteln, insbesondere Getränken, in dem Reinraum RR eine im Wesentlichen keimfreie Atmosphäre herrscht und damit eine erhöhte Lagerbarkeit der abgefüllten Lebensmittel erreicht werden kann.

In Figur 1 ist schematisch ein Betätigungselement 100 gezeigt, welches zum Aufbringen eines Behälterverschlusses 120 auf einen zu verschließenden Behälter vorgesehen ist. Der Behälterverschluss 120 ist in einem Verschließerkonus 122 aufgenommen und kann auf den zu verschließenden Behälter aufgeschraubt werden. Die Rotationsbewegung hierfür wird über das Langzahnrad 124 auf das Ritzel 126 übertragen, wobei die Rotationsbewegung dann über die Rotationshülse 130 auf den Verschließerkonus 122 übertragen wird. Alternativ sind sämtliche aus dem Stand der Technik bekannte Übertragungsmittel zur Übertragung einer rotativen und/oder einer translatorischen Relativbewegung anwendbar.

In der Rotationshülse 130 ist eine Welle 128 geführt, wobei der Verschließerkonus 122 über Lager ebenfalls an der Welle 128 geführt ist. Zwischen der Rotationshülse 130 und der Welle 128 ist ein Wellendichtring 21 angeordnet, der die rotative Relativbewegung der beiden Elemente gegenüber abdichtet.

Um den Behälterverschlusss 120 auf einen entsprechenden Behälter aufschrauben zu können, werden die Rotationshülse 130 sowie die Welle 128 und damit der Verschließerkonus 122 in Hubrichtung X angehoben, dann mit dem aufgenommenen Behälterverschluss 120 auf das Gewinde des Behälters abgesenkt und dann der Verschließerkonus 122 über das Langzahnrad 124 und das Ritzel 126 sowie die Rotationshülse 130 rotiert, um damit den Behälterverschluss 120 aufzuschrauben. Dann werden die Rotationshülse 130 und die Welle 128 mitsamt dem Verschließerkonus 122 von dem verschraubten Behälter in Hubrichtung X abgehoben, wobei der Behälterverschluss 120 aus dem Verschließerkonus 122 herausgezogen wird.

Für einen Fall, in welchem ein Verschließen eines Behälters deshalb nicht stattfinden kann, weil zum gegebenen Maschinentakt kein Behälter unter dem Verschließerkonus 122 angeordnet ist und entsprechend der Behälterverschluss 120 in dem Verschließerkonus 122 verbleibt, ist ein Auswerfelement 132 vorgesehen, welches beim Anheben der Welle 128 in ihrer Position relativ zum Isolatordach 110 verbleibt und entsprechend ein Auswerfstempel 134 relativ zum Verschließerkonus 122 nach unten getrieben wird, derart, dass der Behälterverschluss 120 aus dem Verschließerkonus 122 ausgetrieben wird. Alternativ oder zusätzlich ist möglich, dass die Relativbewegung des Auswerfstempels gegenüber dem Verschließkonus durch aktive Ansteuerung und Bewegung des Auswerfelementes erfolgt.

Eine solche Anordnung eines Verschließelementes in einer Getränkeabfüllanlage ist prinzipiell bekannt.

Um beim Anheben beziehungsweise Absenken der Rotationshülse 130 sowie der Welle 128 und damit des Verschließerkonus 122 für eine Abdichtung der genannten Maschinenelemente gegenüber der Umgebung und insbesondere gegenüber dem Reinraum RR zu erreichen, ist eine dichtende Komponente 1 in Form eines Faltenbalgs vorgesehen, welche zwischen zwei Flanschen 10 und 12 angeordnet ist. Bei einer Auf- und Abbewegung des Verschließerkonus 122 durch Anheben und Absenken der Welle 128 wird die Komponente 1 in Form des Faltenbalgs entsprechend zieharmonika-ähnlich zusammengedrückt beziehungsweise auseinandergezogen und stellt auf diese Weise eine zuverlässige Abdichtung der innenliegenden Teile gegenüber dem Reinraum RR dar.

Eine weitere dichtende Komponente 2 in Form eines weiteren Faltenbalgs ist vorgesehen, welche zur Abdichtung des Auswerfelements 132 bei dessen Auf- und Abbewegung im Verschließzyklus dient.

Beide Komponenten 1, 2 sind aufgrund von mechanischer Belastung, Umwelteinflüssen sowie Alterung anfällig dafür, undicht zu werden. Eine solche undichte Komponente ist jedoch für den Produktionsprozess in einer aseptischen Getränkeabfüllanlage nicht akzeptabel, da über eine defekte Komponente 1, 2 Keime oder Verunreinigungen in den Reinraum RR eintreten können, welche zu einer entsprechenden Kontaminierung des Reinraumes RR und damit der abzufüllenden und abgefüllten Produkte, sowie der zu verschließenden Behälter kommen kann.

Entsprechend mussten die Komponenten 1, 2 bislang ausgebaut und aufwändig von Hand geprüft werden oder vorsorglich in regelmäßigen Instandhaltungszyklen ausgetauscht werden.

Die Komponenten 1, 2 begrenzen jeweils zumindest teilweise ein Innenvolumen 14, 24, welches bei der Auf- und Abbewegung des Verschließerkonus 122 durch Anheben und Absenken der Welle 128 komprimiert und expandiert wird.

Zur Überprüfung der Dichtheit der die Innenräume 14, 24 zumindest teilweise begrenzenden Komponenten 1, 2, sowie sämtlicher anderer Komponenten der Betätigungsvorrichtung 100 ist eine schaltbare Abdichtvorrichtung 30 in Form einer durch Aufblasen expandierbaren Ringdichtung, sowie eine weitere schaltbare Abdichtvorrichtung 32 in Form einer weiteren durch Aufblasen expandierbaren Ringdichtung vorgesehen. Die erste schaltbare Abdichtvorrichtung 30 dient dazu, das Auswerfelement 132 in Form der in der Figur gezeigten Stange gegenüber der Umgebung und insbesondere gegenüber dem Grauraum GR abzudichten. Die zweite schaltbare Abdichtvorrichtung 32 dient dazu, die Rotationshülse 130 gegenüber der Umgebung und insbesondere gegenüber dem Grauraum GR abzudichten. Wenn beide schaltbaren Abdichtvorrichtungen 30, 32 vollständig abgedichtet an den jeweiligen Maschinenteilen anliegen, ist das Innenvolumen 14 beziehungsweise 24 gegenüber der Umgebung vollständig hermetisch abgeschlossen. Diese Abdichtung der Innenvolumina 14, 24 gegenüber der Umgebung wird bei stillstehender Maschine durchgeführt, um in der nachfolgenden Messung, welche ebenfalls bei stillstehender Maschine durchgeführt wird, einen definierten Druckverlauf und damit auch eine definierte Überprüfung der Dichtheit zu erhalten.

Über eine Absaugleitung 4, welche in dem gezeigten Ausführungsbeispiel in dem Auswerfelement 132 angeordnet ist, kann über einen Druckerzeuger 40, der beispielsweise in Form einer Pumpe vorgesehen ist, nun ein Prüfdruck auf das Innenvolumen 14, 24 aufgebracht werden. Bei dem Prüfdruck handelt es sich bevorzugt um einen Unterdruck, um eine Kontaminierung des Reinraumes RR bei Vorliegen eines Defekts in einer Komponente 1, 2 zu vermeiden und um die Gefahr einer mechanischen Beschädigung der Komponenten 1, 2 zu reduzieren. Über einen Druckaufnehmer 42, welcher mit dem Innenvolumen 14, 24 über ein Druckspeichervolumen 422 kommuniziert, wird der Druckverlauf des Prüfdrucks über einen gewissen Zeitraum hinweg gemessen, wobei das Druckspeichervolumen 422 bevorzugt durch die Absaugleitung 4, beispielsweise in Form von Pneumatikschläuchen gebildet wird. Die Messung kann dabei beispielsweise über einige Sekunden hinweg durchgeführt werden, um einen potentiellen Druckanstieg durch einen Defekt in einer Komponente 1, 2 gut und zuverlässig detektieren zu können. Verändert sich der Prüfdruck über den Messzeitraum über einen vorgegebenen Wert hinaus, so ist das System undicht und muss einer Wartung unterzogen werden.

Die Absaugleitung 4 ist in dem gezeigten Ausführungsbeispiel als Innenbohrung in dem als Auswerferstange ausgebildeten Auswerfelement 132 vorgesehen und eine Zugangsbohrung 44 ist am untersten Bereich des durch die untere Komponente 2 definierten Innenraums 24 so angeordnet, dass über die Zugangsbohrung 44 und die Absaugleitung 4 das Absaugen von sich im tiefsten Punkt sammelnder Flüssigkeit, beispielsweise Kondensat, sowie Schmutz und/oder anderer Verunreinigungen möglich ist. Die abgesaugte Flüssigkeit, Kondensat und/oder Schmutz kann über eine Drainage 420 abgeleitet werden.

Das untere Innenvolumen 24 sowie das obere Innenvolumen 14 stehen in Kommunikation miteinander, wobei entsprechende Durchgänge 46 zwischen den Innenvolumina vorgesehen sind, über welche die Kommunikation zwischen den Innenvolumina 14, 24 hergestellt wird.

Im Produktionsbetrieb der Maschine sind die schaltbaren Abdichtvorrichtungen 30, 32 geöffnet, so dass eine entsprechende Ventilation der Innenvolumina 14, 24 über die entsprechenden auf diese Weise entstehenden Belüftungszugänge 16, 26 erreicht wird. Durch eine entsprechende Dimensionierung der Belüftungszugänge 16, 26 kann erreicht werden, dass der Druck in den Innenvolumina 14, 24 im Wesentlichen konstant bleibt, auch wenn die Hubbewegung durch den Verschließerkonus 122 durchgeführt wird. Damit wird eine Beanspruchung der Komponenten 1, 2 aufgrund von Druckschwankungen während des Produktionsbetriebes vermieden.

In dem gezeigten Ausführungsbeispiel sind die schaltbaren Abdichtvorrichtungen 30, 32 als aufblasbare Ringdichtungen ausgeführt. Die aufblasbaren Ringdichtungen sind entsprechend so ausgebildet, dass sie im nicht abdichtenden Zustand einen so großen Ringspalt bereitstellen, dass die auf diese Weise bereit gestellten Belüftungszugänge 16, 26 eine problemlose Ventilation der Innenvolumina 14, 24 gewährleisten.

Im Produktionsbetrieb kann weiterhin über den Druckerzeuger 40 ein konstanter Volumenstrom über die Absaugleitung 4 erzeugt werden, wobei dann ein Luftstrom durch die im Bereich der schaltbaren Abdichtelemente 30, 32 erzeugten Belüftungszugänge 16, 26 in die Innenvolumina 14, 24 eintritt, welcher dann über die Zugangsbohrung 44 und die Absaugleitung 4 abgesaugt wird. Da die Zugangsbohrung 44 im tiefsten Punkt des Innenvolumens 24 angeordnet ist, kann hierüber auch ein Absaugen von Flüssigkeiten, Kondensat oder Schmutz aus den Innenvolumina 14, 24 erreicht werden, so dass die Ausbildung von Keimherden in den Innenvolumina 14, 24 unterbunden wird.

Die Innenvolumina 14, 24 sind über Durchgänge 46 miteinander verbunden, wobei die Durchgänge 46 entweder in Form von Durchgangsbohrungen bereit gestellt werden können, oder aber durch entsprechende Schlitze und Toleranzen zwischen den einzelnen Bereichen. Auf diese Weise können sämtliche Innenvolumina 14, 24 mit dem Druckerzeuger 40 in Kommunikation gebracht werden.

Um bei der Überprüfung der Dichtheit der Komponenten 1, 2 ein falschpositives Ergebnis zu vermeiden, wird über einen Durchgangsprüfer 52 ermittelt, ob sämtliche mit dem Druckerzeuger 40 in Kommunikation stehenden Volumina, also beispielsweise die Innenvolumina 14, 24, die Zugangsbohrung 44, die Durchgänge 46 und die Absaugleitung 4 einen Durchgang bereit stellen. Würde hier ein Durchgang blockieren, beispielsweise durch eine Flüssigkeitsansammlung oder Schmutz, könnte bei einer Druckmessung aufgrund des fehlenden Durchganges ein falschpositives Ergebnis resultieren.

Wird von dem Durchgangsprüfer 52 ermittelt, dass eine Durchgängigkeit nicht gegeben ist, so wird entweder eine nachfolgende Abdichtung der Belüftungszugänge 16, 26 mit der schaltbaren Abdichtvorrichtung 30, 32 vermieden, und/oder es wird ein entsprechendes Alarmsignal ausgegeben. Weiterhin kann zur Lösung der Blockierung des Durchganges auch ein Durchströmen der Innenvolumina 14, 24 mit einem Spülgas sowie ein Absaugen über die Absaugleitung 4 und die Zugangsbohrung 44 durchgeführt werden. Das Lösen der Blockierung des Durchganges kann alternativ in die entgegengesetzte Richtung erfolgen, indem an der Absaugleitung 4 ein Überdruck angelegt wird.

Die Betätigungsvorrichtung 100 ist in dem Isolatordach 110 eingesetzt und an den entsprechenden Verbindungsstellen sind Komponenten 34 in Form von Ringdichtungen vorgesehen, welche zu einer Abdichtung des Durchganges der Betätigungsvorrichtung 100 durch das Isolatordach 110 dienen. Auch diese Komponente 34 kann mit der vorliegenden Vorrichtung geprüft werden, indem hinter der Dichtung ein ein Volumen ausbildender Ringkanal vorgesehen ist, welcher über einen Durchgang 48 mit dem Innenvolumen 14 in Kommunikation steht. Entsprechend kann auch dieser Bereich hinter der Komponente 34 mit einem Prüfdruck beaufschlagt werden, um zu testen, ob die Komponente 34 korrekt abdichtet. Auch der Ringkanal kann eine verschließbare Belüftungsöffnung aufweisen, so dass auch dieser Bereich mit einem Spülgas durchströmt werden kann.

In einer Variante können die in der Figur 1 gezeigten aufblasbaren Ringdichtungen als nicht schaltbare Wellendichtungen ausgebildet sein. Dann ist aber stattdessen ein Belüftungskanal vorgesehen, welcher eine Ventilation des Innenvolumens 14, 24 mit der Umgebung, insbesondere mit dem Grauraum GR, ermöglicht. Diese Belüftung ist dann mit einer schaltbaren Abdichtvorrichtung so versehen, dass entsprechend entweder das Zuführen von Ventilationsgas im Produktionsbetrieb, oder aber das Verschließen des Innenvolumens 14, 24 gegenüber der Umgebung erreicht werden kann, um über die Absaugleitung 4 und die Zugangsbohrung 44 ein Beaufschlagen des Innenvolumens 14, 24 mit einem Prüfdruck zu erreichen, um darüber die Dichtheit des Systems zu bestimmen. Das Ventilationsgas kann steril sein und/oder sterilisierende Wirkung aufweisen.

Um nun eine vollständige Druckprüfung durchführen zu können und um herauszufinden, ob die im Reinraum RR angeordneten Komponenten und insbesondere die Komponenten 1, 2 in Form der Faltenbälge dicht sind oder ausgewechselt werden müssen, wird bei stillstehender Produktionsvorrichtung, also insbesondere im Stillstand der Getränkeabfüllanlage, das jeweilige Innenvolumen 14, 24 über das Schalten der Abdichtvorrichtungen 30, 32 hermetisch gegenüber der Umgebung abgeriegelt. Daraufhin wird das Innenvolumen 14, 24 über die Absaugleitung 4 und die Zugangsbohrung 44 mittels des Druckerzeugers 40 mit einem Prüfdruck, bevorzugt einem Unterdruck, beaufschlagt. Der Druck wird dann über eine Zeitspanne hinweg mittels des Druckaufnehmers 42 gemessen und der Druckverlauf entsprechend analysiert. Auf diese Weise kann ermittelt werden, ob die Komponenten 1, 2 beziehungsweise die Komponente 34 dicht sind und das Gesamtsystem keinen Gasaustausch zwischen dem Grauraum GR und dem Reinraum RR erlaubt. Ebenso kann die abdichtende Funktion der schaltbaren Abdichtvorrichtungen 30, 32 überprüft werden.

Wenn die Druckprüfung ergibt, dass das System hinreichend dicht ist, kann der Produktionsbetrieb wieder aufgenommen werden und mit der Betätigungsvorrichtung 100 entsprechend Behälterverschlüsse 120 auf zu verschließende Behälter aufgebracht werden. Zur Aufnahme des Produktionsbetriebs werden die schaltbaren Abdichtvorrichtungen 30, 32 wieder geöffnet - also die druckbeaufschlagten Ringdichtungen drucklos geschaltet - so dass ein entsprechender Ringspalt entsteht und auf diese Weise ein Belüftungszugang 16, 26 geschaffen wird. Damit wird im Produktionsbetrieb das Einfließen von Umgebungsluft beziehungsweise das Einfließen eines entsprechenden Spülgases in die Innenvolumina 14, 24 der Komponenten 1, 2 möglich. Die Komponenten und insbesondere die Faltenbälge können entsprechend während des Füllbetriebes beziehungsweise des Verschließbetriebes "atmen", so dass sie nicht druckbelastet werden.

Während des Produktionsbetriebes kann weiterhin über die Absaugleitung 4, beziehungsweise die Zugangsbohrung 44 konstant ein Gasstrom durch das Innenvolumen 14, 24 hindurch gesaugt werden, wobei das Absaugen am tiefsten Punkt im Bereich der Zugangsbohrung 44 stattfindet, so dass Kondensat, Feuchtigkeit und/oder andere Verunreinigungen aus dem Innenvolumen 14, 24 entfernt werden.

Das Absaugen von Kondensat beziehungsweise anderen Unreinheiten aus dem Gesamtsystem wird bevorzugt auch vor einer Unterdruckmessung durchgeführt, um sicherzustellen, dass sämtliche miteinander kommunizierende Innenvolumina, insbesondere die in den Komponenten 1, 2 aufgenommenen Innenvolumina 14, 24 sowie die in der Absaugleitung 4 und den jeweiligen Zugangsbohrungen 44 beziehungsweise Durchgängen 46, 48 vorliegenden Verunreinigungen oder Flüssigkeitsreste vollständig abgesaugt werden. Dies ist wesentlich, um zu vermeiden, dass bei einer vorliegenden Leitungsverstopfung ein falsches Dichtheitssignal erreicht wird, obwohl potentiell eine Undichtheit vorliegen kann.

In einer Getränkeabfüllanlage ist üblicherweise eine Vielzahl solcher Komponenten verbaut. Um ein effizientes Prüfen der jeweiligen Komponenten zu erreichen, können in einem ersten Schritt und zur Überprüfung der Dichtheit des Gesamtsystems zunächst sämtliche Innenvolumina miteinander verbunden werden und dann mit dem Unterdruck beaufschlagt werden, so dass eine Dichtheit des Gesamtsystems getestet werden kann. Mit anderen Worten können die Innenvolumina 14, 24 nebeneinander liegender Betätigungsvorrichtungen 100 miteinander verbunden werden und dann über einen einzigen Druckerzeuger 40 entsprechend mit einem Prüfdruck beaufschlagt werden. Hierzu werden bevorzugt sämtliche Innenvolumina über entsprechende Ventilvorrichtungen und beispielsweise eine Ringleitung miteinander verbunden, um diese gemeinsame Beaufschlagung zu erreichen.

Stellt sich bei der Unterdruckprüfung heraus, dass das Gesamtsystem undicht ist, können dann die einzelnen Betätigungselemente 100 separat voneinander mit einem Druckerzeuger 40 und dem Druckaufnehmer 42 in Kommunikation gebracht werden, um zu ermitteln, welche Komponente fehlerhaft ist. Auf diese Weise kann erreicht werden, dass eine schnelle Dichtheitsprüfung des Gesamtsystems in kumulierter Weise durchgeführt werden kann, um in kurzen Produktionspausen das Gesamtsystem auf seine Dichtheit zu überprüfen. Dies kann in relativ kurzer Zeit erfolgen, da lediglich von sämtlichen vorliegenden Betätigungsvorrichtungen 100 die jeweiligen schaltbaren Abdichtvorrichtungen verschlossen werden müssen, um die Unterdruckprüfung durchführen zu können. Stellt sich heraus, dass das System dicht ist, so kann sofort mit der Produktion weiter verfahren werden. Ein einzelnes Ansprechen der jeweiligen Komponenten beziehungsweise ein separates Testen jeder einzelnen Abdichtkomponente ist damit nicht mehr notwendig und muss erst dann durchgeführt werden, wenn ein Defekt in der Gesamtanlage festgestellt wird.

In diesem Zusammenhang kann es sich anbieten, einzelne Sektoren beziehungsweise Winkelabschnitte des Behandlungswinkels zu einzelnen Sektoren zusammenzufassen, beispielsweise jeweils einen Viertelkreis in einer Rundläufermaschine, um bei einem eventuell anfallenden Defekt auch den entsprechenden Quadranten der Rundläufermaschine feststellen zu können, in welchem der potentielle Defekt vorliegt, um das Auffinden der jeweiligen defekten Komponente zu erleichtern.

Durch das Absaugen der Flüssigkeiten, Feuchtigkeit und anderer Verschmutzungen über die am tiefsten Punkt angeordnete Absaugbohrung 46 werden die Maschinenteile geschützt und es wird kein Herd geschaffen, in welchem Bakterien, Hefen etc. wachsen könnten. Weiterhin kann durch die Verwendung des Unterdrucks in den Innenvolumina 14, 24 vermieden werden, dass bei einem eventuell vorliegenden Defekt Schmutz und Unreinheiten aus den Innenvolumina 14, 24 in den Reinraum RR gepresst werden. Die Belüftung über die geöffneten Abdichtvorrichtungen 30, 32 ist so dimensioniert, dass ein problemloser Gasaustausch stattfindet und der Druck innerhalb der Innenvolumina 14, 24 auch im Produktionsbetrieb im Wesentlichen konstant bleibt. Eine Durchspülung mit sterilem und/oder sterilisierendem Gas hat den Vorteil, dass die laufende Produktionscharge noch mit geringem hygienischen Risiko zu Ende gebracht werden kann, bevor ein Austausch von defekten Dichtungskomponenten erfolgen muss.

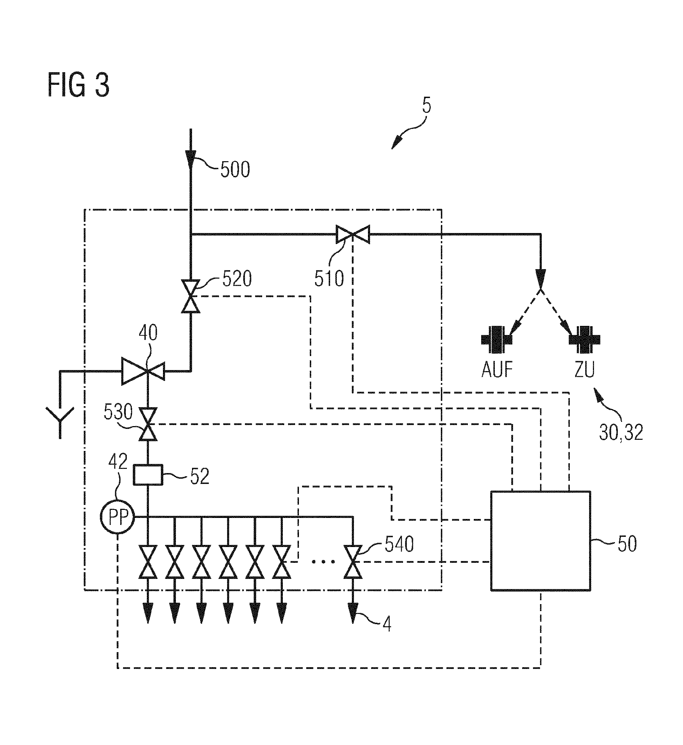

In Figur 3 ist eine schematische Schaltung 5 für die Vorrichtung gezeigt, wobei über eine Druckluftversorgung 500 über ein entsprechendes Schaltventil 510 die jeweiligen schaltbaren Abdichtvorrichtungen 30, 32 in Form aufblasbarer Ringdichtungen geschaltet werden können, um die Kommunikation der Innenvolumina 14, 24 mit der Umgebung im Produktionsbetrieb entweder zuzulassen, oder aber eine Kommunikation der Innenvolumina 14, 24 mit der Umgebung zur Überprüfung der Dichtheit der Komponenten zu verhindern.

Über ein weiteres Schaltventil 520 wird die Druckluftversorgung einer Venturi-Düse, welche als Druckerzeuger 40 dient, geschaltet. Der in dem Druckerzeuger 40 erzeugte Unterdruck wird einem weiteren Schaltventil 530 zugeführt, welches dazu dient, einen einmal erzeugten Unterdruck im stromabwärts liegenden System zu halten. Ein Druckaufnehmer 42 ist nach dem Schaltventil 530 zum Ermitteln des Prüfunterdruckes vorgesehen. Die einzelnen Selektionsventile 540, welche das Zuführen des Druckes zu der jeweiligen Betätigungsvorrichtung 100 und damit auch das Zuführen des Druckes zu den einzelnen Absaugleitungen 4 ermöglichen, sind hier nachgeschaltet.

Die Schaltventile 510, 520 und 530 sowie die Selektionsventile 540 werden von einer Steuervorrichtung 50 angesteuert, um die Überprüfung der Dichtheit der Komponenten durchzuführen. Die Steuervorrichtung schaltet auch die schaltbare Abdichtvorrichtung 30, 32 und überwacht den Druckverlauf mittels des Druckaufnehmers 42 und ist mit dem Durchgangsprüfer 52 verbunden.

Um ein effizientes Prüfen der Gesamtvorrichtung zu ermöglichen, sind beispielsweise in einer Produktionspause sämtliche Selektionsventile 540 geöffnet, um das Aufbringen eines Prüfdruckes auf sämtliche Betätigungsvorrichtungen 100 zu ermöglichen. Nach dem Aufbringen des Prüfdruckes über den Druckerzeuger 40 wird das Schaltventil 530 geschlossen, um den Unterdruck im nachgeschalteten System zu halten. Der Druckaufnehmer 42 misst entsprechend den Druckverlauf über die Zeit hinweg - beispielsweise für 30 Sekunden. Wenn hier ermittelt wird, dass der Druck in dieser Zeit ausreichend konstant gehalten wird, wird angenommen, dass eine ausreichende Dichtheit des Systems gegeben ist und der Produktionsbetrieb kann weiter geführt werden. Zur Wiederaufnahme des Produktionsbetriebs werden dazu die schaltbaren Abdichtvorrichtungen 30, 32 über das Schaltventil 510 wieder abgelassen, so dass eine Belüftung der Innenvolumina 14, 24 ermöglicht wird.

Wenn festgestellt wird, dass das Gesamtsystem nicht dicht ist, werden über eine entsprechende Ansteuerung der Selektionsventile 540 entweder alle Betätigungsvorrichtungen 100 einzeln angesteuert, oder aber es werden in einem Vorschritt einzelne Bereiche zusammengefasst, um nach einem Ausschlussverfahren hier schneller zur defekten Komponente zu gelangen.

Wird ein Ausbau einer Betätigungsvorrichtung 100 notwendig, ist so ist in Figur 1 an der Rotationshülse 130 ein Transportvorsprung 136 gezeigt, welcher dazu dient, beim Herausziehen der Betätigungsvorrichtung 100 nach oben in Hubrichtung X aus dem Isolatordach 110 heraus ein Anliegen des Transportvorsprunges 136 an dem Flanschbereich 10 zu erreichen, wenn das Wartungspersonal das Verschließorgan 100 nach oben herauszieht. Auf diese Weise wird erreicht, dass beim Herausziehen nach oben hin die Komponente 1 nicht vollständig zusammengequetscht wird und die Kraft des Wartungspersonals zum Herausziehen der Betätigungsvorrichtung 100 aus dem Isolatordach 110 nicht über den Faltenbalg 1 übertragen wird, sondern es wird mittels des Transportvorsprungs 136 möglich, bei einem noch relativ entspannten Faltenbalg die gesamte Betätigungsvorrichtung 100 zu entnehmen. Auf diese Weise wird auch beim Aus- und Einbauen die Komponente 1 vor Beschädigung geschützt.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste

- 1: Komponente (Faltenbalg)
- 10: Flansch
- 12: Flansch
- 14: Innenvolumen
- 16: Belüftungszugang

- 100: Betätigungsvorrichtung (Verschließorgan)
- 110: Isolatordach
- 120: Behälterverschluss
- 122: Verschließerkonus
- 124: Langzahnrad
- 126: Ritzel
- 128: Welle
- 130: Rotationshülse
- 132: Auswerfelement
- 136: Transportvorsprung

- 2: Komponente (Faltenbalg)

- 21: Wellendichtung
- 24: Innenvolumen
- 26: Belüftungszugang

- 30: schaltbare Abdichtvorrichtung
- 32: schaltbare Abdichtvorrichtung
- 34: Komponente (Dichtung)

- 4: Absaugleitung
- 40: Druckerzeuger
- 42: Druckaufnehmer
- 44: Zugangsbohrung
- 46: Durchgang

- 48: Durchgang
- 420: Drainage
- 422: Druckspeicher

- 5: Schaltung
- 50: Steuerungsvorrichtung
- 52: Durchgangsprüfer
- 500: Druckluftversorgung
- 510: Schaltventil
- 520: Schaltventil
- 530: Schaltventil
- 540: Selektionsventil

- RR: Reinraum
- GR: Grauraum

- X: Hubrichtung

## Patentansprüche

1. Vorrichtung zur Überprüfung der Dichtheit einer ein Innenvolumen (14, 24) zumindest teilweise begrenzenden Komponente (1, 2) einer Getränkeabfüllanlage, umfassend einen mit dem Innenvolumen (14, 24) kommunizierenden Druckerzeuger (40) zum Beaufschlagen des Innenvolumens (14, 24) mit einem Prüfdruck,
**gekennzeichnet durch**
eine schaltbare Abdichtvorrichtung (30, 32), welche dazu eingerichtet ist, das Innenvolumen (14, 24) für eine Überprüfung der Dichtheit der Komponente gegenüber der Umgebung abzudichten.

2. Vorrichtung gemäß Anspruch 1, **dadurch gekennzeichnet, dass** das Innenvolumen (14, 24) über einen Belüftungszugang (16, 26) mit der Umgebung kommuniziert und der Belüftungszugang (16, 26) mittels der schaltbaren Abdichtvorrichtung (30, 32) abdichtbar ist.

3. Vorrichtung gemäß Anspruch 1 oder 2, **dadurch gekennzeichnet, dass** das Innenvolumen (14, 24) mit einem Druckaufnehmer (42) kommuniziert und der Druckverlauf über eine vorbestimmte Zeit hinweg messbar ist.

4. Vorrichtung gemäß einem der vorstehenden Ansprüche, **dadurch gekennzeichnet, dass** mindestens zwei von unterschiedlichen Komponenten (1, 2) zumindest teilweise begrenzte Innenvolumina (14, 24) miteinander kommunizieren, bevorzugt über Durchgänge (46, 48) miteinander kommunizieren, besonders bevorzugt ständig miteinander kommunizieren.

5. Vorrichtung gemäß einem der vorstehenden Ansprüche, **dadurch gekennzeichnet, dass** eine Komponente ein Faltenbalg (1, 2) oder eine Dichtung (34) zur Abdichtung eines Maschinenteils gegenüber der Umgebung, bevorzugt gegenüber einem Reinraum (RR), ist.

6. Vorrichtung gemäß einem der vorstehenden Ansprüche, **dadurch gekennzeichnet, dass** der Druckerzeuger (40) mit dem Innenvolumen (14, 24) über eine Absaugleitung (4) kommuniziert, wobei die Absaugleitung (4) in das Innenvolumen (14, 24) bevorzugt an dessen tiefstem Punkt einmündet, um ein Absaugen von Flüssigkeiten, Verschmutzungen und/oder Kondensat am tiefsten Punkt des Innenvolumens (14, 24) zu ermöglichen, wobei die Absaugleitung (4) besonders bevorzugt in ein Auswerfelement (132) eines Verschließorgans integriert ist.

7. Vorrichtung gemäß einem der vorstehenden Ansprüche, **dadurch gekennzeichnet, dass** ein Durchgangsprüfer (52) vorgesehen ist, welcher dazu eingerichtet ist, vor der Abdichtung des Innenvolumens (14, 24) mittels der schaltbaren Abdichtvorrichtung (30, 32) die Durchgängigkeit aller mit dem Druckerzeuger (40) kommunizierenden Volumina (14, 24, 44, 46, 48) zu prüfen und bevorzugt bei Vorliegen einer Verstopfung ein Abdichten des Innenvolumens (14, 24) zu verhindern und/oder eine Alarmierung auszugeben.

8. Vorrichtung gemäß einem der vorstehenden Ansprüche, **dadurch gekennzeichnet, dass** der Druckerzeuger (40) dazu eingerichtet ist, das Innenvolumen (14, 24) bei verschlossener Abdichtvorrichtung (30, 32) zur Überprüfung der Dichtheit der Komponente (1, 2) mit einem Prüfdruck zu beaufschlagen und bei geöffneter Abdichtvorrichtung (30, 32) das Innenvolumen (14, 24) mit einem Spülgas zu durchströmen.

9. Behälterbehandlungsvorrichtung für eine Getränkeabfüllanlage, umfassend mindestens zwei Betätigungsvorrichtungen (100) zur Durchführung von Behandlungsschritten an einem Behälter in einem Reinraum (RR), wobei jede Betätigungsvorrichtung (100) mindestens eine ein Innenvolumen (14, 24) zumindest teilweise begrenzende Komponente (1, 2) zur Abdichtung des Innenvolumens gegenüber dem Reinraum (RR) aufweist,
**gekennzeichnet durch**
eine Vorrichtung zur Überprüfung der Dichtheit der das Innenvolumen zumindest teilweise begrenzenden Komponenten (1, 2) gemäß einem der vorstehenden Ansprüche, wobei die Innenvolumina (14, 24) von mindestens zwei Betätigungsvorrichtungen (100) gemeinsam mit einem Druckerzeuger (40) kommunizieren.

10. Behälterbehandlungsvorrichtung gemäß Anspruch 9, **dadurch gekennzeichnet, dass** eine Steuervorrichtung (50) zur Steuerung der Beaufschlagung der Innenvolumina (14, 24) mit dem Prüfdruck sowie zur Steuerung der schaltbaren Abdichtvorrichtungen (30, 32) vorgesehen ist, wobei die Steuervorrichtung (50) dazu eingerichtet ist, die Vorrichtung zur Überprüfung der Dichtheit so zu steuern, dass die Innenvolumina (14, 24) mindestens zweier Betätigungsvorrichtungen (100) gemeinsam mit einem Prüfdruck beaufschlagt werden, der zeitliche Druckverlauf des Prüfdrucks bestimmt wird und aus dem Druckverlauf auf die Dichtheit geschlossen wird, und dass bevorzugt vor der Beaufschlagung der Innenvolumina (14, 24) mit dem Prüfdruck die Innenvolumina (14, 24) mit einem Spülgas durchströmt werden.

11. Behälterbehandlungsvorrichtung gemäß Anspruch 10, **dadurch gekennzeichnet, dass** die Steuervorrichtung (50) dazu eingerichtet ist, die Vorrichtung zur Überprüfung der Dichtheit so zu steuern, dass die Innenvolumina (14, 24) mindestens zweier Betätigungsvorrichtungen (100) miteinander in Kommunikation gebracht werden und gemeinsam mit einem Prüfdruck beaufschlagt werden, wobei bevorzugt ein Beaufschlagen der Innenvolumina (14, 24) aller Betätigungsvorrichtungen (100) und/oder ein selektives Beaufschlagen der Innenvolumina (14, 24) von Gruppen von Betätigungsvorrichtungen (100) mit einem Prüfdruck durchgeführt werden kann.

12. Verfahren zur Überprüfung der Dichtheit einer ein Innenvolumen (14, 24) zumindest teilweise begrenzenden Komponente (1, 2) einer Getränkeabfüllanlage, wobei das Innenvolumen (14, 24) mit einem Druckerzeuger (40) kommuniziert, umfassend die Schritte:
- Abdichten des Innenvolumens (14, 24) gegenüber der Umgebung durch Schalten einer schaltbaren Abdichtvorrichtung (30, 32);
- Beaufschlagen des gegenüber der Umgebung abgedichteten Innenvolumens (14, 24) mit einem Prüfdruck;
- Messen des Druckverlaufs des Prüfdrucks über eine vorbestimmte Zeit;
- Überprüfen der Dichtheit aufgrund des gemessenen Druckverlaufs.

13. Verfahren gemäß Anspruch 12, **dadurch gekennzeichnet, dass** das Innenvolumen (14, 24) vor der Abdichtung gegenüber der Umgebung mit einem Spülgas, bevorzugt Luft, gespült wird, besonders bevorzugt durch Absaugen des Innenvolumens (14, 24) mittels des Druckerzeugers (40).

14. Verfahren gemäß Anspruch 12 oder 13, **dadurch gekennzeichnet, dass** vor dem Abdichten des Innenvolumens die Durchgängigkeit aller mit dem Druckerzeuger (40) kommunizierenden Volumina (14, 24, 44, 46, 48) geprüft wird und bei Vorliegen einer Verstopfung ein Abdichten des Innenvolumens (14, 24) gegenüber der Umgebung durch Schalten der schaltbaren Abdichtvorrichtung (30, 32) verhindert wird und/oder ein Alarmsignal ausgegeben wird.

15. Verfahren gemäß einem der Ansprüche 12 bis 14, **dadurch gekennzeichnet, dass** zur Überprüfung der Dichtheit der Komponenten (1, 2) die Innenvolumina (14, 24) mindestens zweier Betätigungsvorrichtungen (100) miteinander in Kommunikation gebracht werden und gemeinsam mit einem Prüfdruck beaufschlagt werden, wobei bevorzugt ein Beaufschlagen der Innenvolumina (14, 24) aller Betätigungsvorrichtungen (100) und/oder ein selektives Beaufschlagen der Innenvolumina (14, 24) von Gruppen von Betätigungsvorrichtungen (100) mit einem Prüfdruck durchgeführt wird.
